# EUROPÄISCHE PATENTSCHRIFT

(11) **EP 0 467 165 B1**
(45) Veröffentlichungstag und Bekanntmachung des Hinweises auf die Patenterteilung: **02.11.1995**
(21) Anmeldenummer: 91111127.6
(22) Anmeldetag: 04.07.1991
(51) Int. Cl.: C01F 11/02, B01F 17/00, C09C 1/02

(54) **Sedimentationsstabile Feststoffsuspensionen und ihre Herstellung und Verwendung**
Solids suspensions stable against sedimentation and process for their preparation
Suspensions de matières solides stables à la sédimentation et procédé de fabrication de ceux-ci

(30) Priorität: 06.07.1990 DE 4021525
(43) Veröffentlichungstag der Anmeldung: 22.01.1992
(73) Patentinhaber: Walhalla-Kalk Entwicklungs- und Vertriebsgesellschaft mbH, D-93055 Regensburg (DE)
(72) Erfinder: Schuster, Georg, Dipl.-Ing. FH, W-8409 Tegernheim (DE); Kästle, Hans-Hartwig, Dipl.-Ing. FH, W-8411 Laub. (DE)
(74) Vertreter: Beetz & Partner Patentanwälte

(56) Entgegenhaltungen:
- EP-A- 0 285 771
- DE-B- 1 245 825
- GB-A- 11 799
- GB-A- 804 140
- US-A- 3 778 494

## Beschreibung

Die Erfindung betrifft sedimentationsstabile wäßrige Feststoffsuspensionen von gelöschtem Kalk (Kalkmilch), Verfahren zu ihrer Herstellung sowie hierzu geeignete Feststoffgemische mit Stabilisierungsmittel.

Aus US-A-37 78 494 war ein Verfahren zur Herstellung von Produkten zur thermischen Isolierung auf der Basis von Kalk und Zuschlagstoffen bekannt, bei dem, unter anderem, ungelöschter Kalk mit einer verdünnten wäßrigen Lösung von Natrium- oder Kaliumsilicat gelöscht wird, wobei eine an der Grenzfläche der Calciumoxidpartikel gebildete Schicht von Dicalciumsilicat die vollständige Solubilisierung und Umsetzung des Calciumoxids verhindert, das in einer Menge von 2 bis 30 % eingesetzt wird, um eine bestimmte Konsistenz in einem engen Bereich einzustellen und so unerwünschte Lufteinschlüsse und Schichtentrennungen bei daraus hergestellten Formlingen zu verhindern. Nach Zusatz der Zuschlagstoffe, z.B. von Zement, anorganischen Fasern und Füllstoffen, wird der resultierende Brei, der durch die Calciumsilicatschichtbildung abbindeverzögert ist, in entsprechende Formen gegossen, wonach sich Härtung des Produkts durch Erhitzen und Autoklavieren anschließt.

Dementsprechend liegt diesem Stand der Technik nicht die Aufgabe der Stabilisierung einer Feststoffsuspension zugrunde.

Aus GB-A-804 140 war ferner bekannt, stabile Dispersionen von mindestens zwei Oxiden von Metallen oder Halbmetallen, die nicht miteinander kompatibel sind, z.B. von SiO₂ und Al₂O₃ oder von SiO₂ und TiO₂, in einem flüssigen Medium in Form kolloider Dispersionen mit hohem Feststoffgehalt von bis zu 70 % herzustellen, wobei das flüssige Medium ein Alkalimetallsilicat in einer Menge von etwa 0,1 bis 2 % enthält.

Die z.B. als Aerogele hergestellten Partikel der Dispersionen besitzen vorwiegend eine Teilchengröße im Bereich von 0,05 bis 0,5 µm und sind damit erheblich kleiner als Calciumhydroxidpartikel, wie sie in den in der Technik verwendeten Kalkmilchsuspensionen eingesetzt werden, deren Teilchengröße im Bereich von etwa 1 bis etwa 35 µm liegt.

Kalkmilch stellt eine Feststoffsuspension dar, die in großtechnischem Maßstab aus gebranntem Kalk (CaO) oder Dolomitkalk durch Löschen mit Wasser bzw. durch Suspendieren von gelöschtem Kalk, der auch als Kalkhydrat, Weißkalkhydrat bzw. Calciumoxidhydrat bezeichnet wird, oder von Dolomitkalkhydrat in Wasser hergestellt wird. Kalkmilch stellt entsprechend eine wäßrige Suspension dar, die im wesentlichen aus Calciumhydroxid (Ca(OH)₂) besteht. Übliche Nebenbestandteile sind Mg(OH)₂, SiO₂, Fe₂O₃ und Al₂O₃, die gewöhnlich in Mengen unter 1 Masse-%, bezogen auf die Trockenmasse des gelöschten Kalks, vorliegen. Kalkmilch wird insbesondere für Neutralisations- und Fällungsreaktionen verwendet.

Gelöschter Kalk bzw. Kalkmilch sind technisch wichtige Produkte, die auf zahlreichen Anwendungsgebieten in großen Mengen eingesetzt werden, z.B. als Düngemittel, Bindemittel für Anstrichpigmente, zur Küpenfärberei, zur Abwasseraufbereitung, zur Trinkwasseraufbereitung und Abgasreinigung sowie zur Mörtelherstellung.

Dazu wird Kalkmilch entweder aus trockenen Kalkprodukten durch Löschen und/oder durch Suspendieren vor Ort hergestellt oder als gebrauchsfertige, 20- bis 40-%ige Suspension bezogen. Kalksuspensionen werden meist nach Verdünnung als 3 bis 20-%ige Suspension bei den genannten Prozessen eingesetzt.

Da der gebrannte Kalk vor dem Löschen fein vermahlen wird, liegt auch der gelöschte Kalk in Form eines sehr feinen Pulvers vor, dessen Hauptanteil üblicherweise eine Teilchengröße im Bereich von etwa 1 bis etwa 35 µm aufweist. Entsprechende Kalkmilchsuspensionen unterliegen daher einer sehr starken Sedimentation, wobei die gebildeten Sedimente nach mehreren Tagen auch durch starke Misch- bzw. Rührbehandlung praktisch nicht mehr vollständig resuspendierbar sind. Aus diesem Grund werden Kalkmilchbehälter bei Kalkanlagen, in welchen Kalksuspensionen aus Festprodukten hergestellt werden, grundsätzlich mit Rührwerken oder anderen Mischeinrichtungen ausgerüstet; die im Dauerbetrieb betrieben werden. Bei Kalkmilchbehältern, in welchen gebrauchsfertige, 20- bis 40-%ige Kalkmilch gelagert wird, werden die Rührwerke bzw. Mischeinrichtungen intermittierend betrieben. Die Dauer der Umwälzung beträgt aber immer noch mindestens 4 bis 6 h pro Tag. Abgesehen von den Investitionskosten für die Rührwerke sind die damit verbundenen Energiekosten beträchtlich. Beispielsweise ist für einen 2m³-Rührwerksbehälter ein Rührwerk mit einer Leistung von 0,8 bis 1,2 kW im Dauerbetrieb erforderlich. Für einen 20m³-Kalkmilchbehälter ist eine Rührwerksleistung von etwa 7 bis 10 kW erforderlich, was einem jährlichen Energieaufwand von mehr als 60 MWh entspricht. Dies bedeutet, daß auch bei intermittierendem Betrieb mehr als 10 MWh Energie jährlich verbraucht werden.

Die Sedimentationsverhinderung durch Rühren stellt daher einen wesentlichen Kostenfaktor dar, der den Preis der Kalkmilch in erheblichem Maße, und vor allem proportional der Lagerzeit, erhöht.

Es ist bekannt, daß durch Naßvermahlung von Kalkhydrat sedimentationsstabile Kalksuspensionen hergestellt werden können. Die resultierenden Partikelgrößen sind so klein, daß, unterstützt durch die gegenseitige Wechselwirkung der Partikel, praktisch keine Sedimentation mehr auftritt. Diese Verfahrensweise hat jedoch besonders zwei gravierende Nachteile:
1. Die Naßvermahlung erfordert einen erheblichen Energieaufwand;
2. durch Naßvermahlung können nur Konzentrationen bis maximal 20 % erzielt werden.

Da bekanntermaßen Kalksuspensionen von bis zu 40 % hergestellt und transportiert werden, bedeutet das für die genannte sedimentationsstabile Kalkmilch eine Verdoppelung der anfallenden Fracht- und Behälterkosten. Hinzu kommt, daß durch die Naßvermahlung aufgrund der erheblichen Zerkleinerung der Partikel die Korngrößen und ihre Verteilung verändert werden.

Eine weitere Möglichkeit, sedimentationsstabile Kalkmilch herzustellen, besteht im Einsatz hoher Rührenergien, z.B. mittels Dissolver. So hergestellte Kalkmilch ist mit den gleichen, oben genannten Nachteilen behaftet, da auch bei diesem Verfahren eine erhebliche Zerkleinerung der Partikel resultiert, so daß auch hier nicht von einer Sedimentationsstabilisierung im eigentlichen Sinne gesprochen werden kann.

Es bestand daher ein großes Bedürfnis, diesen Nachteilen abzuhelfen und Mittel bereitzustellen, mit denen die Sedimentation von Kalkmilch verhindert bzw. erheblich zurückgedrängt werden kann.

Der Erfindung liegt daher die Aufgabe zugrunde, zumindest weitgehend sedimentationsstabile Kalkmilch und Verfahren zu ihrer Herstellung sowie entsprechende Stabilisierungsmittel enthaltende trockene Feststoffgemische auf der Basis von Kalkprodukten, wie Calciumhydroxid, anzugeben.

Die Aufgabe wird gemäß den unabhängigen Ansprüchen gelöst.

Die abhängigen Ansprüche betreffen vorteilhafte Ausführungsformen der Erfindung.

Die Erfindung beruht auf der völlig überraschenden Feststellung, daß die Sedimentation von Kalkmilch bereits durch Zusatz geringer Mengen Wasserglas weitgehend verhindert werden kann, ohne daß ein dem Stand der Technik entsprechender Rühr- oder Mischaufwand erforderlich ist.

Abgesehen von der dadurch erzielten Einsparung von Rühr- oder Mischeinrichtungen für solche Feststoffsuspensionen und der damit verbundenen erheblichen Energieeinsparung eröffnet die Erfindung zugleich die Möglichkeit, derartige Suspensionen in Kleingebinden, Containern, Fässern etc. bereitzustellen und auf diese Weise für Kleinverbraucher die umständliche Handhabung von Mischeinrichtungen zu vermeiden.

Die mit dem Einsatz von Wasserglas verbundenen Kosten sind aufgrund der geringen Gestehungskosten sehr niedrig. Zudem sind Wasserglassorten verschiedener Spezifikationen in großen Mengen verfügbar.

Hinzu kommt, daß z.B. in DE aufgrund der Trinkwasserzusatzverordnung ein Wasserglaszusatz bis zu einer Konzentration von 50 mg SiO₂/l zugelassen ist, so daß entsprechende stabilisierte Produkte aufgrund ihres weit geringeren Silicatgehalts z.B. auch auf dem Sektor der Lebensmitteltechnologie eingesetzt werden können.

Die erfindungsgemäßen sedimentationsstabilen wäßrigen Suspensionen von Calciumhydroxid (Ca(OH)₂) bzw. Kalkhydrat oder Dolomitkalkhydrat (Kalkmilch) mit einem Gehalt an Ca(OH)₂ bzw. Kalkhydrat oder Dolomitkalkhydrat von 35 bis 45 Masse-% und vorzugsweise von 38 bis 40 Masse-%, bezogen auf die Gesamtmasse der Kalkmilch, sind dadurch gekennzeichnet, daß sie als Stabilisierungsmittel gegen Sedimentation Wasserglas enthalten.

Die erfindungsgemäßen sedimentationsstabilen Suspensionen enthalten besonders vorteilhaft Wasserglas in einer Menge, die einem Zusatz von
(a) 0,5 bis 8 Masse-% und vorzugsweise 1 bis 2 Masse-% festem, 17 bis 20 Masse-% Wasser enthaltenden Wasserglas
   bzw.
(b) 1 bis 19 Masse-% und vorzugsweise 2 bis 5 Masse-% flüssigem Wasserglas von 37 bis 40 ° Bé ,

jeweils bezogen auf die Trockenmasse des suspendierten Feststoffs der betreffenden Suspension,
entspricht.

Unter Wasserglas werden aus entsprechenden Schmelzen erhaltene wasserlösliche Kalium- und Natriumsilicate bzw. deren wäßrige Lösungen verstanden; sie werden auch als Natron- bzw. Kaliwasserglas bezeichnet. Wassergläser sind in fester Form, zumeist als Pulver, sowie in Form viskoser wäßriger Lösungen handelsüblich, die durch Wasserzusatz weiter verdünnt werden können. Diese handelsüblichen flüssigen Wasserglas-Sorten enthalten typischerweise etwa 17 bis 20 Masse- % Wasser.

Die erfindungsgemäßen pulverförmigen Feststoffgemische auf der Basis von Ca(OH)₂ bzw. Kalkhydrat oder Dolomitkalkhydrat sind dadurch gekennzeichnet, daß sie festes Wasserglas mit einem Wassergehalt von etwa 17 bis 20 Masse-% in einer Menge von 0,5 bis 8 Masse-% und vorzugsweise von 1 bis 2 Masse-%, jeweils bezogen auf die Trockenmasse der Feststoffpartikel ohne Zusätze, enthalten.

Für besondere Verwendungszwecke können die erfindungsgemäßen Suspensionen auch weitere Zusätze, wie z.B. gebrannten Ton, Aktivkohle, Bentonite, etc., enthalten.

Im Zusammenhang mit der Sedimentationsstabilisierung von Kalkmilch durch Wasserglaszusatz wurde im Rahmen der Erfindung ferner gefunden, daß thixotrope Bentonite (z.B. Bentone LT der Fa. Kronos Titan, sowie Polyacrylate, z.B. Rohagit SL 140 der Fa. Röhm-Chemie) bei Dosiermengen von 1 bis 4 Masse-%, bezogen auf die fertige Suspension, z.B. etwa 40-%ige Kalkmilch, die Sedimentation der Suspensionen verhindern können.

Es kann daher in manchen Fällen günstig sein, den sedimentationsstabilen Suspensionen bzw. den Wasserglas enthaltenden Feststoffgemischen thixotrope Bentonite und/oder Polyacrylate zuzusetzen, wobei dann zumeist geringere Zusatzmengen an Wasserglas als ohne diese Zusätze zur Stabilisierung erforderlich sind. Die thixotropen Bentonite und/oder Polyacrylate werden vorteilhaft in einer Menge von 1 bis 15 Masse-%, bezogen auf die Masse des Feststoffs der Suspension ohne Zusätze, eingesetzt.

Das Verfahren gemäß der Erfindung zur Herstellung von sedimentationsstabiler Kalkmilch ist gekennzeichnet durch
(A) Einmischen von festem Wasserglas oder einer wäßrigen Wasserglaslösung in bereits zuvor hergestellte Kalkmilch mit einem Gehalt an Ca(OH)₂ bzw. Kalkhydrat oder Dolomitkalkhydrat von 35 bis 45 Masse-% und vorzugsweise von 38 bis 40 Masse-%, bezogen auf die Gesamtmasse der Kalkmilch ohne Wasserglaszusatz,
   oder
(B) Einmischen von festem Wasserglas oder einer wäßrigen Wasserglaslösung in das Ansetzwasser für die Kalkmilch und anschließendes Einmischen des gelöschten Kalks in einer solchen Menge, daß die erhaltene Kalkmilch einer Gehalt an Ca(OH)₂ bzw. Kalkhydrat oder Dolomitkalkhydrat von 35 bis 45 Masse-% und vorzugsweise von 38 bis 40 Masse-%, bezogen auf die Gesamtmasse der Kalkmilch ohne Wasserglaszusatz, aufweist,
(C) Mischen von trockenem gelöschtem Kalk bzw. Dolomitkalk mit festen Wasserglas und Suspendieren des Gemischs in Wasser in einer solchen Menge, daß die erhaltene Kalkmilch einen Gehalt an Ca(OH)₂ bzw. Kalkhydrat oder Dolomitkalkhydrat von 35 bis 45 Masse-% und vorzugsweise 38 bis 40 Masse-%, bezogen auf die Gesamtmasse der Kalkmilch ohne Wasserglaszusatz, aufweist,
   oder
(D) Einmischen von festem Wasserglas oder einer wäßrigen Wasserglaslösung in das Ansetzwasser für das Löschen von gebranntem Kalk (CaO) bzw. Dolomitkalk und Löschen des Kalks mit diesem Ansetzwasser in einer solchen Menge, daß die erhaltene Kalkmilch einen Gehalt an Ca(OH)₂ bzw. Kalkhydrat oder Dolomitkalkhydrat von 35 bis 45 Masse-% und vorzugsweise 38 bis 40 Masse-%, bezogen auf die Gesamtmasse der Kalkmilch ohne Wasserglaszusatz, aufweist,
   oder
(E) Mischen von festem Wasserglas mit gebranntem Kalk (CaO) bzw. Dolomitkalk und Löschen des gebrannten Kalks mit Wasser in einer solchen Menge, daß die erhaltene Kalkmilch einen Gehalt an Ca(OH)₂ bzw. Kalkhydrat oder Dolomitkalkhydrat von 35 bis 45 Masse-% und vorzugsweise 38 bis 40 Masse-%, bezogen auf die Gesamtmasse der Kalkmilch ohne Wasserglaszusatz, aufweist.

Die Mengen der eingesetzten Stoffe werden dabei also jeweils so eingestellt, daß die angestrebte Endkonzentration an Wasserglas bzw. Calciumhydroxid resultiert. Dem Fachmann ist dabei geläufig, daß beim Löschen von CaO mit Wasser aufgrund der dabei auftretenden starken Wärmeentwicklung (1156 kJ/kg CaO) ein Teil des zugesetzten Löschwassers verdampft wird und deshalb bei der technischen Herstellung von Calciumhydroxid ein entsprechender Wasserüberschuß anzuwenden ist.

Die Verfahrensweisen B und D sind aus praktischer Sicht besonders vorteilhaft, da sich das Wasserglas im Ansetzwasser, das zum Einmischen von Ca(OH)₂ bzw. zum Löschen von CaO verwendet wird, besonders leicht und schnell lösen läßt.

Bei der Verfahrensweise C resultiert zunächst ein Gemisch des trockenen Feststoffs, d.h. von trockenem gelöschtem Kalk, mit festem Wasserglas, das, ebenso wie die sedimentationsstabilen Suspensionen, handelsfähig ist; es wird ebenfalls vom Erfindungsgegenstand umfaßt. Derartige Gemische müssen lediglich in einer entsprechenden Wassermenge suspendiert werden, um eine sedimentationsstabile Suspension, z.B. eine ca. 40-%ige Kalkmilch, zu erhalten. Bei niedrigeren Kalkmilchkonzentrationen werden höhere Anteile an Wasserglas angewandt.

Die erfindungsgemäße sedimentationsstabile Kalkmilch läßt sich auf praktisch allen Anwendungsgebieten einsetzen, auf denen auch herkömmliche, nicht sedimentationsstabile Kalkmilch verwendet wird, insbesondere als Düngemittel oder als Bindemittel für Anstrichpigmente, zur Küpenfärberei, zur Abwasseraufbereitung, besonders zur Abtrennung von Sulfaten, z.B. gemäß EP 250 626, zur Trinkwasseraufbereitung, bei der Reinigung von Abgasen aus der Verbrennung fossiler Brennstoffe sowie zur Mörtelherstellung.

Zwei typische handelsübliche Natronwasserglas-Sorten, (Portil^{(R)}N und Portil^{(R)}A der Firma Henkel KG, Düsseldorf, DE) besitzen z.B. folgende chemische Zusammensetzung:

| | Portil N | Portil A |
|---|---|---|
| SiO₂ (Masse-%) | ca. 63 | ca. 54 |
| Na₂O (Masse-%) | ca. 19 | ca. 27 |
| H₂O (Masse-%) | ca. 18 | ca. 19 |
| Massenverhältnis SiO₂:Na₂O | 3,3 - 3,4 | 2,0 - 2,1 |
| Molverhältnis SiO₂:Na₂O | 3,4 - 3,5 | 2,1 - 2,2. |

Ein typisches handelsübliches Kaliwasserglas (Portil^{(R)}K der Firma Henkel KG, Düsseldorf, DE) besitzt ferner folgende chemische Zusammensetzung:

| | |
|---|---|
| SiO₂ (Masse-%) | ca. 56 |
| K₂O (Masse-%) | ca. 28 |
| H₂O (Masse-%) | ca. 17 |
| Massenverhältnis SiO₂:K₂O | ca. 2,0 |
| Molverhältnis SiO₂:K₂O | ca. 3,1. |

Die obengenannten handelsüblichen Wasserglas-Sorten sind feste, hydratisierte Produkte, die zu Pulvern vermahlen sind.

Handelsübliche flüssige Standard-Natronwassergläser (Fa. Van Baerle & Co., Chemische Fabrik, Gernsheim/Rhein, DE) haben beispielsweise folgende Kennzahlen:

| Grädigkeit (°Bé) | Dichte (g/ml) | Na₂O (Masse-%) | SiO₂ (Masse-%) | H₂O (Masse-%) | Massenverhältnis SiO₂:Na₂O | Molverhältnis SiO₂:Na₂O | Viskosität (cP) |
|---|---|---|---|---|---|---|---|
| 29-30 | 1,25-1,27 | 5,6 | 21,9 | 72,5 | 3,9 | 4,0 | - |
| 37-40 | 1,34-1,38 | 8,2 | 27,3 | 64,5 | 3,3 | 3,41 | 70-150 |
| 40-42 | 1,38-1,41 | 9,1 | 30,0 | 60,9 | 3,25 | 3,35 | 200-500 |
| 48-50 | 1,49-1,53 | 12,4 | 32,4 | 55,2 | 2,6 | 2,68 | 1000-1700 |
| 58-60 | 1,67-1,71 | 18,0 | 37,0 | 45,0 | 2,05 | 2,1 | > 50.000 |

Im Rahmen der Erfindung werden bei Verwendung flüssiger Wasserglas-Sorten vorzugsweise Wassergläser mit einer Grädigkeit von 37 bis 40 °Bé eingesetzt. Es können jedoch mit gleichem Erfolg auch flüssige Wasserglas-Sorten höherer oder niedrigerer Grädigkeit bzw. Konzentration eingesetzt werden, wobei die Zusatzmengen an Wasserglas entsprechend umzurechnen sind.

Die Erfindung führt zu dem außerordentlichen Vorteil, insbesondere bei der großtechnischen Herstellung und Lagerung von Kalkmilch in großen Behältern, daß Rühreinrichtungen entfallen können. Dadurch führt die Erfindung zu einer erheblichen Einsparung von durch Mischeinrichtungen bedingten Investitions- und Energiekosten.

Der Hauptvorteil ist jedoch darin zu sehen, daß die erfindungsgemäß stabilisierten Suspensionen eine lange Lagerfähigkeit ohne mechanisches Mischen aufweisen, wobei in vielen Fällen ein Rührwerk überhaupt nicht mehr erforderlich ist. So ist beispielsweise die erfindungsgemäße sedimentationsstabile Kalkmilch mindestens 5 Wochen ohne mechanisches Mischen lagerfähig. Eine Resuspendierung eines eventuell nach längerer Lagerzeit gebildeten Sediments kann beispielsweise auch durch Aufwirbeln mit eingeleiteter Druckluft erfolgen. Damit ermöglicht die Erfindungskonzeption eine außerordentlich hohe Energieeinsparung, da der im erfindungsgemäßen Fall noch erforderliche Misch- bzw. Rühraufwand gegenüber dem einleitend genannten Stand der Technik praktisch nicht mehr ins Gewicht fällt.

Ein weiterer Vorteil ist darin zu sehen, daß erfindungsgemäße Kalkmilch auch bei der Trinkwasseraufbereitung einsetzbar ist, da die geringen Mengen an zugesetztem Wasserglas weit unter den beispielsweise in DE nach der Trinkwasserverordnung zugelassenen Werten liegen.

Die Erfindung wird im folgenden anhand von Ausführungsbeispielen näher erläutert, die sich auf die Herstellung von stabilisierter Kalkmilch beziehen.

Die Prozentangaben sind, soweit nichts anderes angegeben ist, massebezogen (Masse-%).

### Beispiel 1

Herstellung einer sedimentationsstabilen 40 %-igen Kalkmilch.

Für die Versuche wurde jeweils 40 %-ige Kalkmilch in einer Ansatzmenge von 5 kg hergestellt. Es wurde bei Raumtemperatur gearbeitet.

### Verfahrensweise A (gemäß Patentanspruch 8):

In 5 kg 40 %-ige Kalkmilch, die in einem mit Rührwerk versehenen Behälter vorgelegt war, wurden 100 g flüssiges, handelsübliches Natronwasserglas (37 bis 40 °Bé) eingerührt.

### Verfahrensweise B (gemäß Patentanspruch 8):

Das Ansatzwasser wurde in der erforderlichen Menge in einem mit Rührwerk versehenen Behälter vorgelegt und unter Rühren mit 100 g flüssigem, handelsüblichem Natronwasserglas (37 bis 40 °Bé) versetzt.

In beiden Fällen lag entsprechend eine Wasserglaskonzentration von 20 g/kg Kalkmilch bzw. eine Wasserglaskonzentration von 2 %, bezogen auf die 40-%ige Kalkmilchsuspension, vor, die einer Wasserglaskonzentration von 5 %, bezogen auf die Trockenmasse der Kalkmilch, entspricht, gerechnet als wasserhaltiges Wasserglas.

Bei beiden Versuchsreihen wurden nach 2, 3, 5, 20 bzw. 30 Tagen Stehenlassen ohne Rühren die Aufschlämmbarkeit sowie die Serumbildung ermittelt und bewertet.

Zwischen den beiden angewandten Verfahrensweisen bestand kein feststellbarer Unterschied im Ergebnis:

Es bildete sich ein Serumanteil (klarer Überstand auf der stabilisierten Suspension) von maximal 2 bis 5 %, der nach 2 bis 3 Tagen konstant blieb.

Die Kalkmilch wurde während der Ruhephase etwas kompakter, zeigte jedoch keine Sedimentation.

Um das Sedimentationsverhalten besser beobachten zu können, wurde der Kalkmilch Pulverkohle einer mittleren Korngröße von 1 mm zugesetzt. Selbst die größten Teilchen zeigten keinerlei Tendenz, sich abzusetzen.

Auch nach 30 Tagen Ruhephase konnte die Kalkmilch ohne großen Energieaufwand aufgerührt werden.

Läßt man dieses Gemisch bei Raumtemperatur austrocknen, so bleibt die ursprüngliche Form der angesetzten Suspension erhalten. Der aufgebrochene Körper weist bei visueller Beurteilung eine homogene Verteilung von Kalkhydrat, Aktivkohle und Luftporenraum auf.

Die erfindungsgemäße Kalkmilch konnte ohne Rühren weitgehend sedimentationsfrei gelagert werden. Vor der Entnahme von Kalkmilch aus dem Behälter mußte lediglich kurz gerührt werden, um geringfügige Sedimente aufzurühren.

In gleicher Weise durchgeführte Versuche mit einer Dosiermenge an Wasserglas von < 1,5 % führten zu keiner bzw. einer nur kurzfristigen Stabilisierung. Versuche mit einem Wasserglaszusatz von > 3 % führten zu einer kompakten Masse, die nicht mehr pumpfähig war.

### Beispiel 2

In einen Multilift-Container von 5,55 m³ Fassungsvermögen wurden 3,7 t 40 %-ige Kalkmilch eingefüllt. Der Container war mit einer Tauchpumpe mit einer Umwälzleistung von 60 m³/h ausgerüstet. Zu Beginn des Umwälzens wurden der Kalkmilch 74 kg flüssiges, handelsübliches Natronwasserglas (37 bis 40 °Bé) zugesetzt, worauf die Suspension 24 h umgewälzt wurde.

Die Wasserglas-Konzentration betrug entsprechend 2 %, bezogen auf die Masse der 40-%igen Suspension, bzw. 5 %, bezogen auf den Feststoffanteil der Suspension.

Die Kalkmilch wurde dann 6 Wochen ohne Umwälzung stehengelassen. Die Serumbildung betrug maximal 2 bis 5 %. Bei dem verwendeten Behälter betrug die Höhe des klaren Überstands etwa 3 cm bei einer Füllhöhe von 1 m.

Danach ließ sich die Kalkmilch durch die Umwälzeinrichtung problemlos und rasch aufrühren.

Die Versuche wurden bei Außentemperaturen im Bereich von etwa 10 bis etwa 22 °C durchgeführt.

Eine Temperaturerhöhung auf etwa 40 °C während des Umwälzens hatte, ebenso wie eine leichte Frosteinwirkung (- 3 °C), keine negative Auswirkung auf die Suspensionsstabilität.

Eine geringfügige Verdünnung mit Regenwasser (Zusatz von 150 bis 200 l entsprechend einer Verdünnung von ca. 5 %) beeinflußte die Suspensionsstabilität ebenfalls nicht.

Die in den oben angegebenen Beispielen erhaltenen Kalkmilchsuspensionen zeigten ferner keinerlei Beeinträchtigung der chemischen Reaktivität, z.B. bei der Abwasserbehandlung. Das Sedimentationsverhalten der erhaltenen Fällungsschlämme war besser als bei Einsatz normaler Kalkmilch.

### Beispiel 3

In einem 5l-Gebinde wurde Wasser vorgelegt, dem 2 % flüssiges Wasserglas (37 bis 40 °Bé) zugemischt wurden. Anschließend wurde die erforderliche Menge Feinkalk (CaO) so eingerührt, daß eine 40-%ige Kalkmilch daraus entstand. Verdampfungsverluste von Wasser wurden ergänzt.

Die Ergebnisse entsprachen denen von Beispiel 1.

### Beispiel 4

Es wurde ein homogenes Gemisch aus Kalkhydrat (977 g Ca(OH)₂) und festem Wasserglas (Portil N, 23 g) hergestellt. In einem Eimer wurde die erforderliche Wassermenge vorgelegt, um eine 40-%ige Kalkmilch zu erhalten, worauf das homogene Gemisch langsam zugesetzt wurde. Durch Rühren konnte eine stabilisierte Suspension hergestellt werden.

Die Ergebnisse entsprachen denen der Beispiele 1 und 3.

Die in den Beispielen 1 und 2 eingesetzte bzw. hergestellte 40 %-ige Kalkmilch hatte folgende chemische Zusammensetzung:

| | Masse-% |
|---|---|
| Wasser | 60 |
| Ca(OH)₂ | 38 |
| Mg(OH)₂ | 0,4 |
| SiO₂ | 0,4 |
| Fe₂O₃ | 0,1 |
| Al₂O₃ | 0,1. |

Die Kalkmilch besaß ferner folgende physikalische Eigenschaften:

| | |
|---|---|
| Neutralisationsäquivalent | 10 mol/kg |
| Dichte | 1,24 kg/l |
| pH-Wert | 12,5 |
| Viskosität (Brookfield-Viskosimeter LVT, 25 °C) | 2000 mPa·s. |

Die Kalkmilch besaß folgende Korngrößenverteilung:

| | |
|---|---|
| < 32 µm | ca. 97 % |
| < 16 µm | ca. 89 % |
| < 8 µm | ca. 67 % |
| < 4 µm | ca. 41 % |
| < 2 µm | ca. 20 %. |

Die Erfindungskonzeption führt, wie insbesondere auch aus den obigen Beispielen hervorgeht, gegenüber der herkömmlichen Technologie zu erheblichen verfahrenstechnischen und wirtschaftlichen Vorteilen.

Die erfindungsgemäße Kalkmilch ist bei üblichen Lagerungstemperaturen mindestens 5 Wochen ohne mechanische Umwälzung sedimentationsstabil und kann auch nach längerer Lagerzeit leicht und vollständig aufgerührt werden. Bei Kleingebinden bis etwa 1 t ist daher sogar eine mechanische Mischeinrichtung entbehrlich.

Neben den verfahrenstechnischen Vorteilen führt die Erfindung folglich zu erheblichen Energie- und damit Kosteneinsparungen, vor allem aufgrund eingesparter Mischenergie.

Hinzukommt, daß Wasserglas ein nichttoxisches, sogar für die Trinkwasseraufbereitung geeignetes Produkt ist, das in großen Mengen preiswert zur Verfügung steht.

## Patentansprüche

1. Sedimentationsstabile wäßrige Suspensionen von Calciumhydroxid (Ca(OH)₂) bzw. Kalkhydrat oder Dolomitkalkhydrat (Kalkmilch) die als Stabilisierungsmittel gegen Sedimentation Wasserglas enthalten dadurch gekennzeichnet daß sie Ca(OH)₂ bzw. Kalkhydrat oder Dolomitkalkhydrat in einer Menge von 35 bis 45 Masse-%, bezogen auf die Gesamtmasse der Kalkmilch enthalten.

2. Sedimentationsstabile Kalkmilch nach Anspruch 1, mit einem Gehalt an Ca(OH)₂ bzw. Kalkhydrat oder Dolomitkalkhydrat von 38 bis 40 Masse-%, bezogen auf die Gesamtmasse der Kalkmilch.

3. Sedimentationsstabile Kalkmilch nach Anspruch 1 oder 2, dadurch gekennzeichnet, daß sie als Stabilisierungsmittel Natronwasserglas und/oder Kaliwasserglas enthält.

4. Sedimentationsstabile Kalkmilch nach einem der Ansprüche 1 bis 3, dadurch gekennzeichnet, daß sie Wasserglas in einer Menge enthält, die einem Zusatz von
(a) 0,5 bis 8 Masse-% festem, 17 bis 20 Masse-% Wasser enthaltenden Wasserglas
bzw.
(b) 1 bis 19 Masse-% flüssigem Wasserglas von 37 bis 40 °Bé,
jeweils bezogen auf die Masse des suspendierten Feststoffs der Suspension entspricht.

5. Sedimentationsstabile Kalkmilch nach einem der Ansprüche 1 bis 4, dadurch gekennzeichnet, daß sie Wasserglas in einer Menge enthält, die einem Zusatz von
(a) 1 bis 2 Masse-% festem, 17 bis 20 Masse-% Wasser enthaltenden Wasserglas
bzw.
(b) 2 bis 5 Masse-% flüssigem Wasserglas von 37 bis 40 °Bé,
jeweils bezogen auf die Masse des suspendierten Feststoffs der Suspension,
entspricht.

6. Sedimentationsstabile Kalkmilch nach einem der Ansprüche 1 bis 5, dadurch gekennzeichnet, daß sie thixotrope Bentonite und/oder Polyacrylate enthält.

7. Sedimentationsstabile Kalkmilch nach einem der Ansprüche 1 bis 6, dadurch gekennzeichnet, daß sie thixotrope Bentonite und/oder Polyacrylate in einer Menge von 1 bis 15 Masse-%, bezogen auf die Masse des Feststoffs der Suspension ohne Zusatz, enthält.

8. Verfahren zur Herstellung der sedimentationsstabilen Kalkmilch nach einem der Ansprüche 1 bis 7, gekennzeichnet durch
(A) Einmischen von festem Wasserglas oder einer wäßrigen Wasserglaslösung in bereits zuvor hergestellte Kalkmilch mit einem Gehalt an Ca(OH)₂ bzw. Kalkhydrat oder Dolomitkalkhydrat von 35 bis 45 Masse-% bezogen auf die Gesamtmasse der Kalkmilch ohne Wasserglaszusatz,
oder
(B) Einmischen von festem Wasserglas oder einer wäßrigen Wasserglaslösung in das Ansetzwasser für die Kalkmilch und anschließendes Einmischen des gelöschten Kalks in einer solchen Menge, daß die erhaltene Kalkmilch einen Gehalt an Ca(OH)₂ bzw. Kalkhydrat oder Dolomitkalkhydrat von 35 bis 45 Masse-% bezogen auf die Gesamtmasse der Kalkmilch ohne Wasserglaszusatz, aufweist,
oder
(C) Mischen von trockenem gelöschtem Kalk bzw. Dolomitkalk mit festem Wasserglas und Suspendieren des Gemischs in Wasser in einer solchen Menge, daß die erhaltene Kalkmilch einen Gehalt an Ca(OH)₂ bzw. Kalkhydrat oder Dolomitkalkhydrat von 35 bis 45 Masse-% bezogen auf die Gesamtmasse der Kalkmilch ohne Wasserglaszusatz, aufweist,
oder
(D) Einmischen von festem Wasserglas oder einer wäßrigen Wasserglaslösung in das Ansetzwasser für das Löschen von gebranntem Kalk (CaO) bzw. Dolomitkalk und Löschen des Kalks mit diesem Ansetzwasser in einer solchen Menge, daß die erhaltene Kalkmilch einen Gehalt an Ca(OH)₂ bzw. Kalkhydrat oder Dolomitkalkhydrat von 35 bis 45 Masse-% bezogen auf die Gesamtmasse der Kalkmilch ohne Wasserglaszusatz, aufweist
oder
(E) Mischen von festem Wasserglas mit gebranntem Kalk (CaO) bzw. Dolomitkalk und Löschen des gebrannten Kalks mit Wasser in einer solchen Menge, daß die erhaltene Kalkmilch einen Gehalt an Ca(OH)₂ bzw. Kalkhydrat oder Dolomitkalkhydrat von 35 bis 45 Masse-% bezogen auf die Gesamtmasse der Kalkmilch ohne Wasserglaszusatz, aufweist.

9. Verfahren nach Anspruch 8, dadurch gekennzeichnet, daß Natronwasserglas und/oder Kaliwasserglas eingesetzt werden.

10. Verfahren nach Anspruch 8 oder 9, dadurch gekennzeichnet, daß das Wasserglas in einer Menge eingesetzt wird, die einem Zusatz von
(a) 0,5 bis 8 Masse-% festem, 17 bis 20 Masse-% Wasser enthaltenden Wasserglas
bzw.
(b) 1 bis 19 Masse-% flüssigem Wasserglas von 37 bis 40 °Bé,
jeweils bezogen auf die Masse des suspendierten Feststoffs der Suspension,
entspricht.

11. Verfahren nach einem der Ansprüche 8 bis 10, dadurch gekennzeichnet, daß thixotrope Bentonite und/oder Polyacrylate in die Suspension eingebracht werden, vorzugsweise in einer Menge von 1 bis 15 Masse-%, bezogen auf die Masse des Feststoffs der Suspension ohne Zusatz.

12. Pulverförmige Feststoffgemische auf der Basis von Ca(OH)₂ bzw. Kalkhydrat oder Dolomitkalkhydrat zur Herstellung von sedimentationsstabiler Kalkmilch nach einem der Ansprüche 1 bis 7, dadurch gekennzeichnet, daß sie 0,5 bis 8 Masse-% festes Wasserglas mit einem Wassergehalt von 17 bis 20 Masse-%, bezogen auf die Masse der Feststoffpartikel ohne Zusatz, enthalten.

13. Pulverförmige Feststoffgemische nach Anspruch 12, dadurch gekennzeichnet, daß sie 1 bis 2 Masse-% festes Wasserglas enthalten.

14. Feststoffgemische nach Anspruch 12 oder 13, dadurch gekennzeichnet, daß sie thixotrope Bentonite und/oder Polyacrylate enthalten, vorzugsweise in einer Menge von 1 bis 15 Masse-%, bezogen auf die Masse des Feststoffs der Suspension ohne Zusätze.

## Claims

1. Sedimentation-stable aqueous suspensions of calcium hydroxide (Ca(OH)₂) or slaked lime or dolomitic slaked lime (milk of lime) containing an antisedimentation stabilising agent in the form of water-glass, characterised in that they contain Ca(OH)₂ or slaked lime or dolomitic slaked lime in a proportion of 35 to 45 wt.% relative to the total weight of milk of lime.

2. Sedimentation-stable milk of lime according to claim 1, containing 38 to 40 wt.% Ca(OH)₂ or slaked lime or dolomitic slaked lime relative to the total weight of milk of lime.

3. Sedimentation-stable milk of lime according to claim 1 or 2, characterised in that the stabilising agents therein are soda water-glass and/or potassium water-glass.

4. Sedimentation-stable milk of lime according to any of claims 1 to 3, characterised in that it contains water-glass in a proportion corresponding to an addition of
(a) 0.5 to 8 wt.% of solid water-glass containing 17 to 20 wt.% water or
(b) 1 to 19 wt.% liquid water-glass at 37 to 40°Bé,
in each case relative to the weight of suspended solids.

5. Sedimentation-stable milk of lime according to any of claims 1 to 4, characterised in that it contains water-glass in a proportion corresponding to an addition of
(a) 1 to 2 wt.% of solid water-glass containing 17 to 20 wt.% water or
(b) 2 to 5 wt.% liquid water-glass at 37 to 40°Bé,
in each case relative to the weight of suspended solids.

6. Sedimentation-stable milk of lime according to any of claims 1 to 5, characterised in that it contains thixotropic bentonites and/or polyacrylates.

7. Sedimentation-stable milk of lime according to any of claims 1 to 6, characterised in that it contains thixotropic bentonites and/or polyacrylates in a proportion of 1 to 15 wt.% relative to the weight of solids in suspension without addition.

8. A process for the preparation of the sedimentation-stable milk of lime according to any of claims 1 to 7, characterised by:
(A) mixing solid water-glass or an aqueous water-glass solution in previously prepared milk of lime containing 35 to 45 wt.% of Ca(OH)₂ or slaked lime or dolomitic slaked lime relative to the total weight of milk of lime without addition of water-glass, or
(B) mixing solid water-glass or an aqueous water-glass solution in the batch water for the milk of lime and subsequently mixing the slaked lime in a proportion such that the resulting milk of lime contains 35 to 45 wt.% of Ca(OH)₂ or slaked lime or dolomitic slaked lime relative to the total weight of milk of lime without the addition of water-glass or
(C) mixing dry slaked lime or dolomitic lime with solid water-glass and suspending the mixture in water in a proportion such that the resulting milk of lime contains 35 to 45 wt.% of Ca(OH)₂ or slaked lime or dolomitic slaked lime relative to the total weight of slaked lime without the addition of water-glass, or
(D) mixing solid water-glass or an aqueous water-glass solution in the batch water for slaking quicklime (CaO) or dolomitic lime and slaking the lime with this batch water in a proportion such that the resulting milk of lime contains 35 to 45 wt.% of Ca(OH)₂ or slaked lime or dolomitic slaked lime relative to the total weight of milk of lime without the addition of water-glass or
(E) mixing solid water-glass with quicklime (CaO) or dolomitic lime and slaking the quicklime with water in a proportion such that the resulting milk of lime contains 35 to 45 wt.% of Ca(OH)₂ or slaked lime or dolomitic slaked lime relative to the total weight of milk of lime without the addition of water-glass.

9. A process according to claim 8, characterised in that soda water-glass and/or potassium water-glass is used.

10. A process according to claim 8 or 9, characterised in that the water-glass is used in a proportion corresponding to an addition of
(a) 0.5 to 8 wt.% of solid water-glass containing 17 to 20 wt.% water or
(b) 1 to 19 wt.% liquid water-glass at 37 to 40°Bé,
in each case relative to the weight of suspended solids.

11. A process according to any of claims 8 to 10, characterised in that thixotropic bentonites and/or polyacrylates are introduced into the suspension, preferably in a proportion of 1 to 15 wt.% relative to the weight of suspended solids without addition.

12. Pulverulent mixtures of solids based on Ca(OH)₂ or slaked lime or dolomitic slaked lime for the preparation of sedimentation-stable milk of lime according to any of claims 1 to 7, characterised in that the mixtures contain 0.5 to 8 wt.% of solid water-glass containing 17 to 20 wt.% water relative to the weight of solid particles without addition.

13. Pulverulent mixtures of solids according to claim 12, characterised in that they contain 1 to 2 wt.% of solid water-glass.

14. Mixtures of solids according to claim 12 or 13, characterised in that they contain thixotropic bentonites and/or polyacrylates, preferably in a proportion of 1 to 15 wt.% relative to the weight of suspended solids without additives.

## Revendications

1. Suspensions aqueuses stables à la sédimentation d'hydroxyde de calcium (Ca(OH)₂) ou d'hydrate de chaux ou d'hydrate de chaux-dolomite (lait de chaux) qui contiennent comme stabilisant vis-à-vis de la sédimentation du silicate de sodium, caractérisées en ce qu'elles contiennent Ca(OH)₂ ou de l'hydrate de chaux ou de l'hydrate de chaux-dolomite en une quantité de 35 à 45 % en masse, par rapport à la masse totale de lait de chaux.

2. Lait de chaux stable à la sédimentation selon la revendication 1, avec une teneur en Ca(OH)₂ ou hydrate de chaux ou hydrate de chaux-dolomite de 38 à 40 % en masse par rapport à la masse totale de lait de chaux.

3. Lait de chaux stable à la sédimentation selon la revendication 1 ou 2, caractérisé en ce qu'il contient comme stabilisants du silicate de sodium et/ou du silicate de potassium.

4. Lait de chaux stable à la sédimentation selon l'une des revendications 1 à 3, caractérisé en ce qu'il contient le silicate de sodium en une quantité, qui correspond à une addition de
(a) 0,5 à 8 % en masse de silicate de sodium solide contenant 17 à 20 % en masse d'eau ou
(b) 1 à 19 % en masse de solution aqueuse de silicate de sodium de 37 à 40°Bé,
chaque fois par rapport à la masse du solide en suspension dans la suspension.

5. Lait de chaux stable à la sédimentation selon l'une des revendications 1 à 4, caractérisé en ce qu'il contient le silicate de sodium en une quantité qui correspond à une addition de
(a) 1 à 2 % en masse de silicate de sodium solide contenant 17 à 20 % en masse d'eau ou
(b) 2 à 5 % en masse de solution de silicate de sodium de 37 à 40°Bé,
chaque fois par rapport à la masse du solide en suspension dans la suspension.

6. Lait de chaux stable à la sédimentation selon l'une des revendications 1 à 5, caractérisé en ce qu'il contient des bentonites et/ou des polyacrylates thixotropes.

7. Lait de chaux stable à la sédimentation selon l'une des revendications 1 à 6, caractérisé en ce qu'il contient des bentonites et/ou des polyacrylates thixotropes en une quantité de 1 à 15 % en masse rapportée à la masse du solide de la suspension sans addition.

8. Procédé de préparation de lait de chaux stable à la sédimentation selon l'une des revendications 1 à 7, caractérisé par
(A) l'incorporation par mélange de silicate de sodium solide ou d'une solution aqueuse de silicate de sodium dans un lait de chaux préparé au préalable avec une teneur en Ca(OH)₂ ou d'hydrate de chaux ou d'hydrate de chaux-dolomite de 35 à 45 % en masse par rapport à la masse globale du lait de chaux sans addition de silicate de sodium,
ou
(B) l'incorporation par mélange de silicate de sodium solide ou d'une solution aqueuse de silicate de sodium dans l'eau d'empâtage du lait de chaux et ensuite incorporation par mélange de la chaux éteinte en une quantité telle que le lait de chaux obtenu présente une teneur en Ca(OH)₂ ou en hydrate de chaux ou en hydrate de chaux-dolomite de 35 à 45 % en masse par rapport à la masse globale du lait de chaux sans addition de silicate de sodium,
ou
(C) le mélange de chaux éteinte sèche anhydre ou de chaux-dolomite avec du silicate de sodium solide et mise en suspension du mélange dans l'eau en une quantité telle que le lait de chaux obtenu présente une teneur en Ca(OH)₂ ou hydrate de chaux ou hydrate de chaux-dolomite de 35 à 45 % en masse par rapport à la masse globale du lait de chaux sans addition de silicate de sodium,
ou
(D) l'incorporation par mélange de silicate de sodium solide ou d'une solution aqueuse de silicate de sodium dans l'eau d'empâtage pour éteindre la chaux vive (CaO) ou la chaux-dolomite et éteindre la chaux avec cette eau d'empâtage en une quantité telle que le lait de chaux obtenu présente une teneur en Ca(OH)₂ ou en hydrate de chaux ou en hydrate de chaux-dolomite de 35 à 45 % en masse par rapport à la masse globale du lait de chaux sans addition de silicate de sodium,
ou
(E) le mélange de silicate de sodium solide avec de la chaux vive (CaO) ou de la chaux-dolomite et extinction de la chaux vive avec de l'eau en une quantité telle que le lait de chaux obtenu présente une teneur en Ca(OH)₂ ou hydrate de chaux ou hydrate de chaux-dolomite de 35 à 45 % en masse par rapport à la masse totale de lait de chaux sans addition de silicate de sodium.

9. Procédé selon la revendication 8, caractérisé en ce qu'on utlise le silicate de sodium ou le silicate de potassium.

10. Procédé selon la revendication 8 ou 9, caractérisé en ce qu'on utilise le silicate de sodium en une quantité qui correspond à une addition de
(a) 0,5 à 8 % en masse de silicate de sodium solide contenant 17 à 20 % en masse d'eau ou
(b) 1 à 19 % en masse de silicate de sodium en solution de 37 à 40°Bé,
chaque fois par rapport à la masse du solide en suspension dans la suspension.

11. Procédé selon l'une des revendications 8 à 10, caractérisé en ce qu'on incorpore dans la suspension des bentonites et/ou des polyacrylates thixotropes, de préférence en une quantité de 1 à 15 % en masse, par rapport à la masse du solide en suspension sans addition.

12. Mélanges de solides en poudre à base de Ca(OH)₂ ou hydrate de chaux ou hydrate de chaux-dolomite pour préparer du lait de chaux stable à la sédimentation selon l'une des revendications 1 à 7, caractérisés en ce qu'ils contiennent 0,5 à 8 % en masse de silicate de sodium solide avec une teneur en eau de 17 à 20 % en masse, par rapport à la masse de particules solides sans addition.

13. Mélanges de solides en poudre selon la revendication 12, caractérisés en ce qu'ils contiennent 1 à 2 % en masse de silicate de sodium solide.

14. Mélanges de solides selon la revendication 12 ou 13, caractérisés en ce qu'ils contiennent des bentonites et/ou des polyacrylates thixotropes, de préférence en une quantité de 1 à 15 % en masse, par rapport à la masse du solide de la suspension sans addition.
